# EUROPÄISCHE PATENTSCHRIFT

(11) **EP 2 312 864 B1**
(45) Veröffentlichungstag und Bekanntmachung des Hinweises auf die Patenterteilung: **19.09.2012**
(21) Anmeldenummer: 10013479.0
(22) Anmeldetag: 08.10.2010
(51) Int. Cl.: H04N 17/00

(54) **Bildsensor und Betriebsverfahren**
Picture sensor and operation method
Capteur d'images et procédé de fonctionnement

(30) Priorität: 13.10.2009 DE 102009049201
(43) Veröffentlichungstag der Anmeldung: 20.04.2011
(73) Patentinhaber: Arnold&Richter Cine Technik GmbH&Co. Betriebs KG, 80799 München (DE)
(72) Erfinder: Cieslinski, Michael, 85521 Ottobrunn (DE)
(74) Vertreter: Manitz, Finsterwald & Partner GbR

(56) Entgegenhaltungen:
- EP-A1- 0 915 619
- WO-A1-91/04498
- DE-A1- 19 626 427
- US-B1- 6 797 933

## Beschreibung

Die vorliegende Erfindung betrifft einen Bildsensor, insbesondere CMOS-Bildsensor, für elektronische Kameras, mit einer Vielzahl von in Zeilen und Spalten angeordneten lichtempfindlichen Pixeln, wobei alle oder zumindest ein Teil der Pixel einer Spalte mit einer jeweiligen gemeinsamen Spaltenleitung verbunden sind, und wobei der Bildsensor für eine oder mehrere der Spaltenleitungen eine jeweilige Signalvorverarbeitungseinrichtung aufweist, um von den Pixeln erzeugte und auf die jeweilige Spaltenleitung schaltbare Nutzsignale zu verarbeiten. Die Erfindung betrifft ferner eine Bildsensoreinheit.

Bekannte elektronische Kameras enthalten einen Bildsensor, der eine Vielzahl von in Zeilen und Spalten angeordneten lichtempfindlichen Elementen bzw. Pixel umfasst, welche durch ein Objektiv der Kamera fallendes Licht in elektrische Signale umwandeln. Zum Auslesen eines Bildes wird jedes der Pixel adressiert, und ein Signal, das zu einer durch eine Belichtung gesammelten Ladung des Pixels proportional ist, wird zu einem Ausgang des Bildsensors geleitet und in ein digitales Signal umgewandelt.

Zum Auslesen eines Bildes werden die Pixel zeilenweise mittels einer gemeinsamen Zeilenleitung adressiert und über am Ende der Spaltenleitungen angeordnete Signalvorverarbeitungseinrichtungen ausgegeben und mit Hilfe von auf dem Sensor vorhandener oder externer Analog-DigitalWandler digitalisiert.

Üblicherweise werden zur Reduzierung des Einflusses unterschiedlicher Offset-Pegel der Pixel, auch als Fixed Pattern Noise (FPN) bezeichnet, zwei Werte aus jedem Pixel ausgelesen, nämlich ein Signalwert, welcher bei belichtetem Pixel erzeugt wird, und ein Referenzwert, welcher bei unbelichtetem und zurückgesetztem Pixel erzeugt wird und ein Offset-Signal darstellt. Signalwert und Referenzwert werden einem Differenzverstärker zugeführt, welcher Bestandteil der Signalvorverarbeitungseinrichtung ist. Das eigentliche Bildsignal wird aus der Differenz von Signal- und Referenzwert gewonnen und kann anschließend weiterverarbeitet werden. Ein derartiges Verfahren wird auch als Correlated-Double-Sampling (CDS) bezeichnet.

Elektronische Kameras werden heute zunehmend bei der Produktion von Kinofilmen eingesetzt. Bei dieser Anwendung treten regelmäßig sehr hohe Kosten für Schauspieler und die Produktionsmitarbeiter auf. Daher ist es besonders wichtig, dass die eingesetzten Kameras fehlerfrei funktionieren.

Bei defekten elektronischen Kameras sind vor allem solche Fehler besonders nachteilig, die nicht sofort erkannt werden. Während ein Totalausfall einer elektronischen Kamera ohne weiteres erkennbar ist und die betreffende Kamera ausgetauscht wird, bleiben Fehler, die nur geringfügige Bildstörungen verursachen und z.B. auf Verschmutzung des Sensors, Veränderung der Kennlinien von elektronischen Bauteilen oder erhöhtes Rauschen zurückzuführen sind, möglicherweise zunächst unerkannt.

Dennoch können derartige Bildstörungen bei einer Projektion des Kinofilms auf einer großen Leinwand deutlich sichtbar werden und durch nachträgliche, bei der Postproduktion vorgenommene Bildkorrekturen sogar noch verstärkt werden.

Beim Auftreten von Bildstörungen müssen die betroffenen Bilder aufwendig manuell retuschiert werden. Im schlimmsten Fall muss die Filmaufnahme wiederholt werden, was mit erheblichen Mehrkosten verbunden ist.

Gewöhnlich wird die korrekte Funktion einer elektronischen Kamera verifiziert, indem mit der Kamera definierte Vorlagen abgefilmt werden. Diese enthalten typischerweise verschiedene kalibrierte Farbtafeln, Vorlagen mit hohem Kontrastumfang sowie homogen ausgeleuchtete Flächen. Beispielsweise wird eine Ulbricht-Kugel mit großformatigen Vorlagen verwendet, die in einem abgedunkelten Raum abgefilmt wird.

Eine derartige Ausrüstung ist jedoch häufig zu sperrig, um sie am Drehort zu verwenden. Zudem ist für die Auswertung der aufgenommenen Testdaten eine spezielle Analysesoftware nötig, die für ihren Betrieb das Vorhandensein eines Computers und besonderes Fachwissen der Bedienperson erfordert.

Dokument WO 91/04498 A1 offenbart einen Bildsensor und eine Bildsensoreinheit gemäß dem jeweiligen Oberbegriff der Ansprüche 1 und 12.

Dokument DE 19626427 A1 offenbart ein Bildsensorfeld, bei dem ein Rücksetz-FET mit einer steuerbaren Spannung getrieben wird, um die Sperrspannung über der Photodiode auf einen einstellbaren Pegel einer Testspannung einzustellen.

Es ist die Aufgabe der Erfindung, einen Bildsensor und eine Bildsensoreinheit anzugeben, welche eine Funktionsüberwachung einer elektronischen Kamera insbesondere im laufenden Betrieb ermöglichen.

Diese Aufgabe wird durch einen Bildsensor mit den Merkmalen des Anspruchs 1 gelöst und insbesondere durch einen Bildsensor, insbesondere CMOS-Bildsensor, für elektronische Kameras mit einer Vielzahl von in Zeilen und Spalten angeordneten lichtempfindlichen Pixeln, wobei alle oder zumindest ein Teil der Pixel einer Spalte mit einer jeweiligen gemeinsamen Spaltenleitung verbunden sind, und wobei der Bildsensor für eine oder mehrere der Spaltenleitungen eine jeweilige Signalvorverarbeitungseinrichtung aufweist, um von den Pixeln erzeugte und auf die jeweilige Spaltenleitung schaltbare Nutzsignale zu verarbeiten. Der Bildsensor ist dazu ausgebildet, wahlweise eines von zumindest zwei Testeingangssignalen auf die Spaltenleitungen aufzuschalten, wobei der Bildsensor zumindest eine erste und eine zweite Spannungsquelle zur Erzeugung der Testeingangssignale aufweist, und wobei die jeweilige Spannungsquelle eine unabhängig von der Versorgungsspannung des Bildsensors geregelte Spannungsquelle ist.

Durch das Aufschalten der Testeingangssignale kann für jedes Pixel eine durch die Größe der Testeingangssignale vorgegebene Simulation bestimmter Belichtungssituationen erreicht werden. Es werden hierbei definierte Ausgangssignale der Pixel nachgebildet. Dadurch kann überprüft werden, ob Defekte oder Unregelmäßigkeiten zum Beispiel im Bereich der sensorinternen Leitungen, beispielsweise der Spaltenleitungen, oder im Bereich der nachfolgenden Signalvorverarbeitung vorliegen, etwa bei einzelnen Verstärkern, Abtast-Halte-Gliedern oder Analog-Digital-Wandlern.

Vorzugsweise ist der Bildsensor dazu ausgebildet, die Testeingangssignale ohne wesentlichen Spannungsabfall auf die Spaltenleitungen aufzuschalten, d.h. das Aufschalten der Testeingangssignale auf die Spaltenleitungen erfolgt mittels entsprechend konfigurierter Schalter unmittelbar ohne wesentlichen Spannungsabfall. Hierdurch werden unerwünschte Rauschquellen und durch Fertigungstoleranzen bedingte Abweichungen der tatsächlich eingespeisten Testeingangssignale zwischen den verschiedenen Spaltenleitungen vermieden. Mit anderen Worten wird durch die Verwendung von Schaltern, die eine Übertragung der Testeingangssignale ohne Spannungsabfall ermöglichen, gewährleistet, dass an den verschiedenen Spaltenleitungen dasselbe jeweilige Testeingangssignal anliegt. Hierdurch sind genauere Messungen möglich. Insbesondere ist es hierfür bevorzugt, wenn die Testeingangssignale nicht um die jeweilige Gate-Source-Spannung eines zwischengeschalteten Transistors vermindert werden.

Um besonders genaue Messergebnisse zu erhalten, ist die zur Erzeugung der Testeingangssignale verwendete jeweilige Spannungsquelle eine unabhängig von der Versorgungsspannung des Bildsensors geregelte Spannungsquelle.

Gemäß einer bevorzugten Ausführungsform ist jede Spaltenleitung derart mit einem jeweiligen ersten Schalter und einem jeweiligen zweiten Schalter verbunden, dass die jeweilige Spaltenleitung über den ersten Schalter und den zweiten Schalter wahlweise mit zumindest einer ersten Testsignalleitung oder einer zweiten Testsignalleitung verbunden werden kann. Dadurch kann auf einfache Weise eine Zuordnung verschiedener Testeingangssignale zu den Spaltenleitungen erreicht werden.

Gemäß einer bevorzugten Ausführungsform sind die ersten Schalter mit einer ersten Steuerleitung zur gemeinsamen Ansteuerung der ersten Schalter verbunden und die zweiten Schalter mit einer zweiten Steuerleitung zur gemeinsamen Ansteuerung der zweiten Schalter verbunden. Mit dieser Anordnung kann zu einem bestimmten Zeitpunkt auf jede Spaltenleitung das gleiche Testeingangssignal aufgeschaltet werden.

Gemäß einer weiteren Ausführungsform der Erfindung sind die Spaltenleitungen mit verschiedenen Testsignalleitungen verbindbar. Dadurch ist es beispielsweise möglich, in einem Testbild vertikale Linien oder Streifenmuster zu erzeugen.

Vertikale Streifenmuster sind insbesondere wichtig, um Echos oder Geisterbilder erkennen zu können. So werden bei Kameras, die gleichzeitig eine hohe Anzahl von lichtempfindlichen Elementen oder eine hohe Bildrate besitzen, Bildsensoren verwendet, die mehrere Ausgänge A aufweisen, welche in einem jeweiligen Auslesezyklus parallel - und somit schneller - ausgelesen werden können. Zusätzlich können die Spalten in Spaltengruppen eingeteilt sein, welche jeweils mehrere Spalten aufweisen, wobei die Anzahl der Spalten in einer jeden der Spaltengruppen der Anzahl der Ausgänge A entspricht. Dabei sind die Spalten den Ausgängen des Bildsensors nach Art nebeneinander liegender Einheitsmatrizen zugeordnet, so dass die Spalten mit den Nummern N, N+A, N+2A usw. jeweils dem Ausgang mit der Nummer N zugeordnet sind, wobei die Spalten und die Ausgänge jeweils fortlaufend nummeriert sind.

So ist beispielsweise bei einem Bildsensor mit 32 Ausgängen und mit einer Unterteilung der Spalten in Spaltengruppen in einem ersten Auslösezyklus die erste Spalte des Bildsensors, welche der ersten Spalte der ersten Spaltengruppe entspricht, dem ersten Ausgang zugeordnet. Die zweite Spalte des Bildsensors, welche der zweiten Spalte der ersten Spaltengruppe entspricht, ist dem zweiten Ausgang zugeordnet usw. bis zu der 32. Spalte des Bildsensors, welche der 32. Spalte der ersten Spaltengruppe entspricht, die dem 32. Ausgang zugeordnet ist. In dem nachfolgenden Auslesezyklus ist die 33. Spalte des Bildsensors, welche der ersten Spalte der zweiten Spaltengruppe entspricht, wieder dem ersten Ausgang zugeordnet, die 34. Spalte des Bildsensors, welche der zweiten Spalte der zweiten Spaltengruppe entspricht, wieder dem zweiten Ausgang zugeordnet USW.

Jeder der Ausgänge des Bildsensors weist einen eigenen Ausgangsverstärker auf, wobei durch die Ausgangsverstärker die Signale der Pixel verstärkt werden, um anschließend digitalisiert zu werden.

Es ist bekannt, dass das jeweils aktuell an einem Ausgangsverstärker anliegende Signal immer einen kleinen, beispielsweise im Promillebereich liegenden Anteil des durch den jeweiligen Ausgangsverstärker unmittelbar zuvor verstärkten Signals enthält, welcher Anteil beispielsweise durch thermische Effekte und/oder Rückwirkungen auf die Spannungsversorgung verursacht wird. Während der störende Einfluss des Signals des Vorgängerpixels bei einem Bildsensor mit einem einzigen Ausgang bei großen Unterschieden zwischen zwei unmittelbar nacheinander verstärkten Signalen zwar eine Art Unschärfe im Bild erzeugt, die mit dem Auge nicht wahrnehmbar ist, macht sich bei einem Bildsensor mit mehreren Ausgängen der Anteil des Signals des jeweiligen Vorgängerpixels - also der Anteil des unmittelbar zuvor verstärkten Signals - bei der Verstärkung des Signals desjenigen Pixels bemerkbar, das um die Anzahl der Ausgänge A von dem Vorgängerpixel entfernt angeordnet ist.

Beispielsweise wird so in einem Bild, welches eine helle Kerzenflamme in einem ansonsten dunklen Raum zeigt, ein visuelles Echo der Kerzenflamme erzeugt, welches seitlich zu der Original-Kerzenflamme versetzt ist. Eine derartige echoartige Bildstörung wird als Geisterbild bezeichnet. So ist bei dem vorstehend beschriebenen Bildsensor mit 32 Ausgängen das Echo um 32 Pixel von dem Original versetzt.

Mit Hilfe der vorliegenden Erfindung können nun beliebige vertikale Streifenmuster erzeugt werden, mit denen derartige Störungen in der Signalverarbeitungskette erkannt werden können.

Für eine Verbindung der Spaltenleitungen mit verschiedenen Testsignalleitungen kann ein Register vorgesehen sein, welches ausgebildet ist, die ersten und zweiten Schalter für jede Spaltenleitung separat anzusteuern, so dass die jeweilige Spaltenleitung wahlweise mit der ersten Testsignalleitung, der zweiten Testsignalleitung oder keiner Testsignalleitung verbunden ist. In dem Register kann ein Muster abgelegt werden, welches die Aufschaltung der Testeingangssignale steuert. Dieses Muster kann statisch, d.h. für alle Zeilen gleich oder auch zeilenweise unterschiedlich oder veränderbar sein.

Ferner kann der Bildsensor wenigstens eine Auswerteeinrichtung aufweisen, die mit einem gemeinsamen Ausgang der Signalvorverarbeitungseinrichtungen verbunden ist, wobei die Auswerteeinrichtung dazu ausgebildet ist, die Testeingangssignale nach deren Verarbeitung in den Signalvorverarbeitungseinrichtungen auszuwerten. Hierdurch können die so erzeugten Testdifferenzsignale oder Testbilder zeitnah, insbesondere während des laufenden Betriebs, ausgewertet werden. Durch die Unterbringung auf dem Sensor wird eine Platz sparende Bauweise erreicht, und eine Verfälschung der Testsignale durch große Leitungslängen wird vermieden.

Der Bildsensor kann auch dazu ausgebildet sein, wahlweise eines von mehr als zwei Testeingangssignalen (z.B. eines von vier Testeingangssignalen) auf die Spaltenleitungen aufzuschalten. In diesem Fall ist vorzugsweise eine entsprechende Anzahl von Schaltern, Testsignalleitungen und/oder Spannungsquellen vorgesehen.

Die Aufgabe der Erfindung wird ferner durch eine Bildsensoreinheit mit den Merkmalen des Anspruchs 12 gelöst. Eine derartige Bildsensoreinheit umfasst einen Bildsensor der vorstehend erläuterten Art und zumindest eine erste externe Spannungsquelle und eine zweite externe Spannungsquelle zur Erzeugung der genannten Testeingangssignale, wobei die externen Spannungsquellen mit zugeordneten Anschlüssen des Bildsensors verbunden sind, und wobei die jeweilige externe Spannungsquelle eine unab- hängig von der Versorgungsspannung des Bildsensors geregelte Spannungsquelle ist.

Weitere vorteilhafte Ausgestaltungen der Erfindung sind in den Unteransprüchen, der Beschreibung und der Zeichnung angegeben.

Die Erfindung wird nachfolgend anhand von Ausführungsbeispielen mit Bezug auf die Zeichnung beschrieben.

Es zeigen, jeweils in schematischer Darstellung:
- Fig. 1: eine erste Ausführungsform eines erfindungsgemäßen Bildsensors,
- Fig. 2: eine zweite Ausführungsform eines erfindungsgemäßen Bildsensors, und
- Fig. 3: eine dritte Ausführungsform eines erfindungsgemäßen Bildsensors.

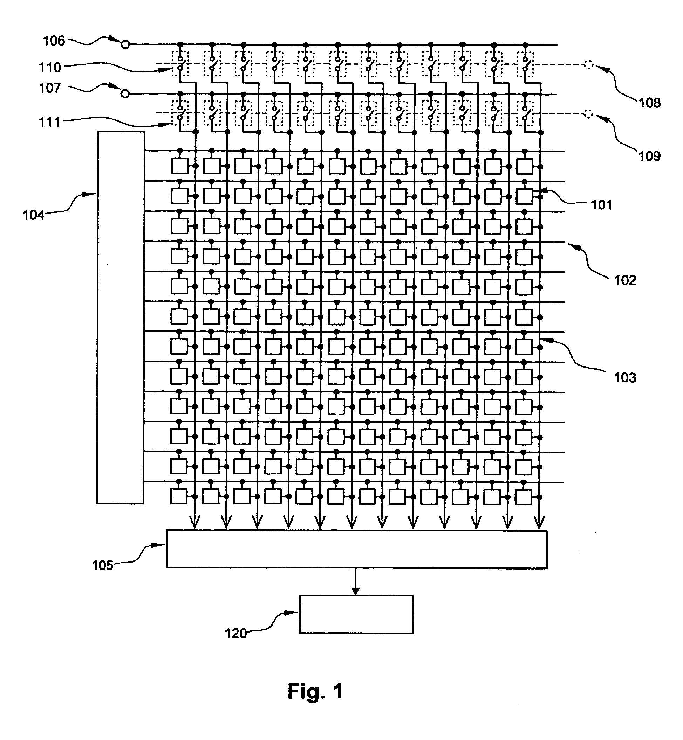

Der in Fig. 1 bis 3 dargestellte Bildsensor kann sowohl bei Stillbild- als auch Laufbildkameras verwendet werden und weist eine Vielzahl von lichtempfindlichen Pixeln 101 auf, die in Zeilen (hier horizontal dargestellt) und in Spalten (hier vertikal dargestellt) angeordnet sind. Die Pixel 101 jeder Spalte sind mit einer jeweiligen Spaltenleitung 103 verbunden. Alle Pixel einer Zeile sind mit einer jeweiligen Zeilenleitung 102 verbunden. Eine Zeilenauswahlschaltung 104 ermöglicht die Auswahl einer bestimmten Zeilenleitung 102, so dass alle Pixel der betreffenden Zeile über die jeweiligen Spaltenleitungen 103 mit einer jeweiligen Signalvorverarbeitungseinrichtung verbunden sind, welche insbesondere Spaltenverstärker umfasst.

Die für jede Spaltenleitung 103 vorhandenen Signalvorverarbeitungseinrichtungen sind hier nicht einzeln dargestellt, sondern Bestandteil einer Signalvorverarbeitungseinheit 105, welche darüber hinaus auch Abtast-Halte-Glieder und/oder Analog-Digital-Wandler zur Digitalisierung der von den Spaltenverstärkern erzeugten Signale umfassen kann.

Die Spaltenleitungen 103 sind jeweils über erste Schalter 110 mit einer ersten Testsignalleitung 106 verbindbar. Darüber hinaus sind die Spaltenleitungen 103 jeweils über zweite Schalter 111 mit einer zweiten Testsignalleitung 107 verbindbar. Über die erste Testsignalleitung 106 und die zweite Testsignalleitung 107 können Testeingangssignale auf die Spaltenleitungen 103 aufgeschaltet werden. Die Signalvorverarbeitungseinrichtungen der Signalvorverarbeitungseinheit 105 sind dazu ausgebildet, nicht nur die von den Pixeln 101 erzeugten und auf die jeweilige Spaltenleitung 103 geschalteten elektrischen Signale (d.h. die Nutzsignale) zu verarbeiten, sondern auch die genannten Testeingangssignale.

Die drei Ausführungsbeispiele unterscheiden sich im Wesentlichen durch die Ansteuerung der Schalter 110, 111, welche nachfolgend noch näher erläutert wird.

Die Signalvorverarbeitungseinheit 105 weist einen gemeinsamen Ausgang der Signalvorverarbeitungseinrichtungen auf, an dem eine Auswerteeinheit 120 zur Auswertung der Testeingangssignale angeschlossen ist.

Obwohl für den hier dargestellten Bildsensor nur eine einzige Signalvorverarbeitungseinheit 105 dargestellt ist, ist es selbstverständlich auch möglich, in bekannter Weise anstelle einer einzigen Signalvorverarbeitungseinheit mehrere parallel arbeitende Signalvorverarbeitungseinheiten vorzusehen, um ein schnelleres Auslesen des Bildsensors zu ermöglichen. Entsprechend sind dann die gemeinsamen Ausgänge der mehreren Signalvorverarbeitungseinheiten mit der Auswerteeinheit 120 verbunden.

Nachfolgend wird nun der Betrieb des erfindungsgemäßen Bildsensors gemäß dem ersten Ausführungsbeispiel beschrieben.

Bei dem ersten Ausführungsbeispiel gemäß Fig. 1 sind eine erste Steuerleitung 108 zur gemeinsamen Ansteuerung der ersten Schalter 110 und eine zweite Steuerleitung 109 zur gemeinsamen Ansteuerung der zweiten Schalter 111 vorgesehen. Zum Aufschalten der Testsignale wird entweder die erste oder die zweite Steuerleitung 108 bzw. 109 mit einem Steuersignal beaufschlagt.

Wie eingangs erwähnt wurde, werden beim CDS-Verfahren aus jedem Pixel zwei Werte ausgelesen, nämlich ein Signalwert und ein Referenzwert. Die Differenz dieser beiden Werte wird dann verstärkt und in einem Analog-Digital-Wandler digitalisiert. Demnach müssen auch zwei entsprechende Testsignalwerte bereitgestellt werden.

Zur Durchführung einer beispielhaften Bildsensorüberprüfung wird eine erste Spannungsquelle an die erste Testsignalleitung 106 und eine zweite Spannungsquelle an die zweite Testsignalleitung 107 angelegt. Bei den nicht dargestellten Spannungsquellen kann es sich sowohl um interne, auf dem Bildsensor integrierte Spannungsquellen als auch um externe Spannungsquellen handeln. Beispielsweise liefert die erste Spannungsquelle eine Spannung von 2 V und die zweite Spannungsquelle eine Spannung von 1,5 V. Die Regelung der Spannungsquellen ist so auszulegen, dass die Testspannungen auch unter Last stabil und rauscharm sind.

Durch entsprechende Ansteuerung über die erste Steuerleitung 108 werden die ersten Schalter 110 betätigt, so dass nun die erste Spannungsquelle mit einer Spannung von 2 V an den Spaltenleitungen 103 anliegt. Nachfolgend wird der Bildsensor so ausgelesen, dass die Spannung von 2 V als Referenzwert in die jeweiligen Signalvorverarbeitungseinrichtungen eingelesen und zwischengespeichert wird.

Anschließend wird die Verbindung der Spaltenleitung 103 mit der ersten Testsignalleitung unterbrochen und durch eine Betätigung der zweiten Schalter 111 mittels der zweiten Steuerleitung 109 eine Verbindung mit der zweiten Spannungsquelle (1,5 V) hergestellt. Diese Spannung wird in die jeweiligen Signalvorverarbeitungseinrichtungen als Signalwert eingelesen und zwischengespeichert.

Hier entspricht also die Spannung von 2 V einem Referenzwert und die Spannung von 1,5 V einem Signalwert. Aus der Differenz dieser beiden Werte ergibt sich am Ausgang der jeweiligen Signalverarbeitungseinrichtung (z.B. nach Verstärkung) ein Testdifferenzsignal, das der Differenz (0,5 V) der beiden Testeingangssignale entspricht. Die in den einzelnen Signalvorverarbeitungseinrichtungen erzeugten Testdifferenzsignale werden digitalisiert und an die Auswerteeinheit 120 ausgegeben.

Diese Schritte werden entsprechend der Zeilenanzahl des Bildsensors wiederholt, so dass letztlich aus den Testdifferenzsignalen ein erstes Testbild erzeugt werden kann, das einem hellen Eingangsbild entspricht. Dieses erste Testbild kann von der Auswerteeinheit 120 analysiert werden. Beispielsweise können die digitalisierten Testdifferenzsignale mit einem vorgegebenen Referenzwert verglichen werden.

Vorzugsweise wird der vorstehend beschriebene Vorgang wiederholt, wobei in Abweichung vom ersten Durchgang die erste Testspannung von 2 V sowohl für die Erzeugung des Referenzwerts als auch des Signalwerts verwendet wird, d.h. die Spaltenleitungen 103 sind in beiden Fällen über die ersten Schalter 110 mit der ersten Testsignalleitung 106 verbunden. Aufgrund der Differenzbildung beträgt das Testdifferenzsignal in diesem Fall 0 V, welches ebenfalls digitalisiert und an die Auswerteeinheit 120 ausgegeben wird. Das derart erzeugte zweite Testbild entspricht einem schwarzen Eingangsbild. Dieses zweite Testbild kann in der Auswerteeinheit 120 separat analysiert werden oder mit dem ersten Testbild verglichen werden.

Durch eine zeilenweise unterschiedliche Ansteuerung der Schalter 110, 111 lassen sich Testbilder erzeugen, welche horizontale Linien aufweisen. Wenn also eine Testbildzeile mit einem Referenzwert von 2 V und einem Signalwert von 1,5 V erzeugt, während bei den nachfolgenden neun Testbildzeilen die an der ersten Testsignalleitung 106 anliegenden 2 V sowohl für den Referenzwert als auch für den Signalwert verwendet werden, entsteht ein Testbild, bei dem jede zehnte Zeile hell ist, während alle dazwischen liegenden neun Zeilen dunkel sind.

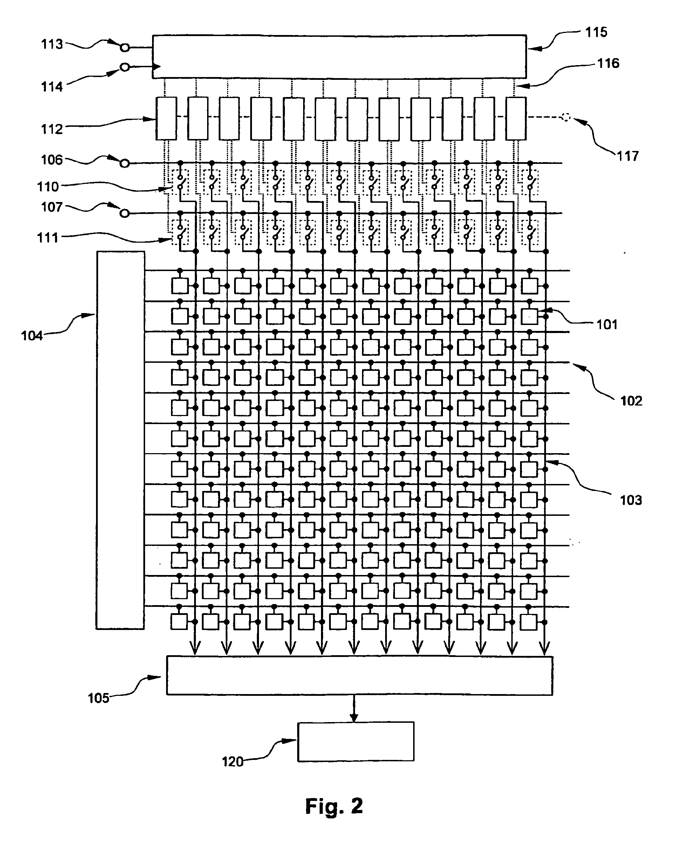

Das zweite Ausführungsbeispiel (Fig. 2) unterscheidet sich vom ersten Ausführungsbeispiel (Fig. 1) darin, dass die ersten und zweiten Schalter 110, 111 nicht über gemeinsame Steuerleitungen 108, 109 angesteuert werden, sondern dass für jede Spalte separat ausgewählt werden kann, ob die zugehörige Spaltenleitung 103 mit der ersten Testsignalleitung 106 oder der zweiten Testsignalleitung 107 verbunden werden soll. Mit anderen Worten ist der Bildsensor gemäß Fig. 2 dazu ausgebildet, die Testeingangssignale spaltenweise variabel auf die Spaltenleitungen 103 aufzuschalten, d.h. ohne feste Vorbelegung beispielsweise aufgrund einer entsprechenden Verschaltung von zugeordneten Transistoren.

Dazu ist ein Register 115 mit einem Dateneingang 113 vorgesehen, über den Datenmuster in das Register 115 geladen werden können. Die Größe des Registers 115 bestimmt sich aus der Spalten- und Zeilenanzahl des Bildsensors. Das im Register 115 abgelegte Datenmuster definiert, welche der beiden Testsignalleitungen 106, 107 mit einer bestimmten Spaltenleitung 103 verbunden werden soll. Das Register 115 dient also als Steuerregister.

Das Register 115 weist eine der Spaltenzahl entsprechende Anzahl von Registerausgängen 116 auf, deren jeweiliger Zustand durch das Datenmuster bestimmbar ist und die mit einer jeweiligen Steuerlogik 112 verbunden sind. Die Steuerlogiken 112 sind mit einer gemeinsamen Steuerleitung 117 verbunden. Liegt nun an dieser gemeinsamen Steuerleitung 117 ein Signal an, betätigt jede Steuerlogik 112 in Abhängigkeit von dem Zustand des zugeordneten Registerausgangs 116 entweder einen ersten Schalter 110 oder einen zweiten Schalter 111.

Das Register 115 verfügt ferner über einen Takteingang 114, so dass für jede Testbildzeile eine andere Zeile des Datenmusters zur Ansteuerung der Registerausgänge 116 herangezogen wird. Durch entsprechende Datenmuster lassen sich neben Testbildern mit vertikalen Streifenmustern auch rechteckförmige Muster oder beliebige andere Muster erzeugen.

Alternativ kann auch ein Register 115 verwendet werden, das nur zur Speicherung einzeiliger Datenmuster ausgelegt ist. Nach dem Auslesen einer oder mehrerer Zeilen mit einem bestimmten Datenmuster kann ein anderes Datenmuster über den Dateneingang 113 in das Register 115 geladen werden, sodass auch mit einem einzeiligen Register Testbilder mit horizontalen und vertikalen Strukturen erzeugt werden können.

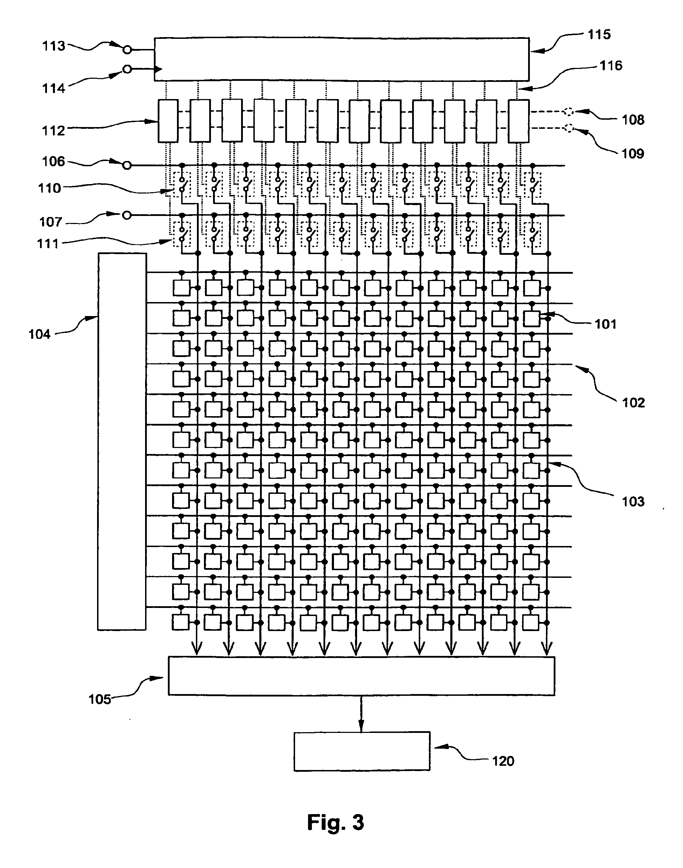

Das dritte Ausführungsbeispiel (Fig. 3) entspricht weitgehend dem zweiten Ausführungsbeispiel (Fig. 2) und unterscheidet sich darin, dass die Steuerlogiken 112 mit zwei Steuerleitungen 108, 109 anstelle der gemeinsamen Steuerleitung 117 verbunden sind. Dadurch ist es möglich, die Testspannungen nicht nur in Abhängigkeit von dem im Register 115 abgelegten Datenmuster auf die Spaltenleitungen 103 aufzuschalten, sondern alternativ eine der Testsignalleitungen 106 bzw. 107 unabhängig vom Inhalt des Registers 115 durch wahlweises Ansteuern aller ersten Schalter 110 bzw. aller zweiten Schalter 111 ähnlich wie beim ersten Ausführungsbeispiel nach Fig. 1 mit allen Spaltenleitungen 103 zu verbinden.

Dazu erfolgt eine entsprechende Auswertung der Zustände der beiden Steuerleitungen 108, 109 in den Steuerlogiken 112. Zum Beispiel kann die Codierung gemäß nachstehender Tabelle erfolgen:

| Steuerleitung 108 | Steuerleitung 109 | Mit den Spaltenleitungen 103 verbundene Testsignalleitung: |
|---|---|---|
| 0 | 0 | keine Testsignalleitung |
| 1 | 0 | erste Testsignalleitung 106 |
| 0 | 1 | zweite Testsignalleitung 107 |
| 1 | 1 | Testsignalleitung gemäß Datenmuster |

Die Einspeisung der Testspannungen aus den zentralen Testsignalleitungen 106, 107 stellt bei allen Ausführungsformen sicher, dass alle mit einer jeweiligen Testsignalleitung 106, 107 verbundenen Spaltenleitungen 103 mit genau derselben Testspannung beaufschlagt werden. Damit werden Artefakte gegenüber Lösungen vermieden, bei denen Testsignale individuell für jede Spalte erzeugt werden und somit trotz nominell gleicher Spannung aufgrund von Bauteiltoleranzen geringfügig voneinander abweichen. Die Schalter 110, 111 gewährleisten eine direkte, weitgehend spannungsabfallfreie und rauschfreie Einspeisung der Testspannungen in die Spaltenleitungen 103.

Bei allen Ausführungsbeispielen kann eine fortlaufende Überwachung des Bildsensors insbesondere während des regulären Betriebs der Kamera erfolgen, wenn zwischen dem Auslesen von zwei Nutzsignal-Bildern ein oder zwei Testbilder auf die vorstehend beschriebene Weise erzeugt werden. Während des Auslesens der Testbilder können die Pixel des Bildsensors deaktiviert werden.

In der Auswerteeinheit 120 kann dann eine automatisierte Auswertung des oder der Testbilder zur Erkennung von Defekten oder Bildfehlern erfolgen, beispielsweise durch eine Analyse mittels geeigneter Verfahren auf der Grundlage einer Fourier-Analyse oder einem Vergleich mit abgespeicherten Referenzbildern.

Bei einer Erkennung von Defekten oder Bildfehlern kann ein optisches oder akustisches Signal an die Bedienperson der Kamera ausgegeben werden.

Analog zu der Verwendung von zwei Testspannungen ist es bei den vorstehend erläuterten Ausführungsbeispielen natürlich auch möglich, mehr als zwei Testspannungen zu verwenden, d.h. mehr als zwei Testspannungen wahlweise auf die Spaltenleitungen 103 aufzuschalten. Wenn beispielsweise vier Testspannungen verwendet werden, so werden in dem Register 115 gemäß Fig. 2 und 3 jeweils zwei Bit pro Spalte vorgesehen, um für jede Spaltenleitung 103 eine der vier Testspannungen auswählen zu können.

### Bezugszeichenliste

- 101: Pixel
- 102: Zeilenleitung
- 103: Spaltenleitung
- 104: Zeilenauswahlschaltung
- 105: Signalvorverarbeitungseinheit
- 106: erste Testsignalleitung
- 107: zweite Testsignalleitung
- 108: erste Steuerleitung
- 109: zweite Steuerleitung
- 110: erster Schalter
- 111: zweiter Schalter
- 112: Steuerlogik
- 113: Dateneingang
- 114: Takteingang
- 115: Register
- 116: Registerausgang
- 117: gemeinsame Steuerleitung
- 120: Auswerteeinheit

## Patentansprüche

1. Bildsensor, insbesondere CMOS-Bildsensor, für elektronische Kameras, mit einer Vielzahl von in Zeilen und Spalten angeordneten lichtempfindlichen Pixeln (101), wobei alle oder zumindest ein Teil der Pixel (101) einer Spalte mit einer jeweiligen gemeinsamen Spaltenleitung (103) verbunden sind, wobei der Bildsensor für eine oder mehrere der Spaltenleitungen (103) eine jeweilige Signalvorverarbeitungseinrichtung (105) aufweist, um von den Pixeln erzeugte und auf die jeweilige Spaltenleitung (103) schaltbare Nutzsignale zu verarbeiten, wobei der Bildsensor dazu ausgebildet ist, wahlweise eines von zumindest zwei Testeingangssignalen auf die Spaltenleitungen (103) aufzuschalten, und wobei der Bildsensor zumindest eine erste und eine zweite Spannungsquelle zur Erzeugung der Testeingangssignale aufweist,
**dadurch gekennzeichnet,**
**dass** die jeweilige Spannungsquelle eine unabhängig von der Versorgungsspannung des Bildsensors geregelte Spannungsquelle ist.

2. Bildsensor nach Anspruch 1,
**dadurch gekennzeichnet,**
**dass** der Bildsensor dazu ausgebildet ist, die Testeingangssignale ohne Spannungsabfall auf die Spaltenleitungen (103) aufzuschalten.

3. Bildsensor nach Anspruch 1 oder 2,
**dadurch gekennzeichnet,**
**dass** jede Spaltenleitung (103) derart mit zumindest einem jeweiligen ersten Schalter (110) und einem jeweiligen zweiten Schalter (111) verbunden ist, dass die jeweilige Spaltenleitung (103) über den ersten Schalter (110) und den zweiten Schalter (111) wahlweise mit zumindest einer ersten Testsignalleitung (106) oder einer zweiten Testsignalleitung (107) verbunden werden kann.

4. Bildsensor nach Anspruch 3,
**dadurch gekennzeichnet,**
**dass** die ersten Schalter (110) zwischen der ersten Testsignalleitung (106) und der jeweiligen Spaltenleitung (103) vorgesehen sind, und dass die zweiten Schalter (111) zwischen der zweiten Testsignalleitung (107) und der jeweiligen Spaltenleitung (103) vorgesehen sind.

5. Bildsensor nach Anspruch 3 oder 4,
**dadurch gekennzeichnet,**
**dass** die ersten Schalter (110) mit einer ersten Steuerleitung (108) zur gemeinsamen Ansteuerung der ersten Schalter (110) verbunden sind, und
**dass** die zweiten Schalter (111) mit einer zweiten Steuerleitung (109) zur gemeinsamen Ansteuerung der zweiten Schalter (111) verbunden sind.

6. Bildsensor nach Anspruch 3 oder 4,
**dadurch gekennzeichnet,**
**dass** ein Register (115) vorgesehen ist, welches ausgebildet ist, die ersten und zweiten Schalter (110, 111) für jede Spaltenleitung (103) separat anzusteuern, so dass die jeweilige Spaltenleitung (103) wahlweise mit der ersten Testsignalleitung (106), der zweiten Testsignalleitung (107) oder keiner Testsignalleitung verbunden ist.

7. Bildsensor nach Anspruch 6,
**dadurch gekennzeichnet,**
**dass** zwischen dem Register (115) und dem ersten und zweiten Schalter (110, 111) einer jeden Spaltenleitung (103) eine jeweilige Steuerlogik (112) vorgesehen ist, wobei die Steuerlogiken (112) eingangsseitig mit einem jeweiligen Registerausgang (116) und mit einer gemeinsamen Steuerleitung (117) verbunden sind, und wobei die Steuerlogiken (112) dazu ausgebildet sind, in Abhängigkeit von einem Steuersignal an der gemeinsamen Steuerleitung (117) entweder den jeweiligen ersten Schalter (110) oder den jeweiligen zweiten Schalter (111) in Abhängigkeit von dem Zustand des jeweiligen Registerausgangs (116) zu betätigen,
oder
**dass** zwischen dem Register (115) und dem ersten und zweiten Schalter (110, 111) einer jeden Spaltenleitung (103) eine jeweilige Steuerlogik (112) vorgesehen ist, wobei die Steuerlogiken (112) eingangsseitig mit einem jeweiligen Registerausgang (116) und mit einer ersten gemeinsamen Steuerleitung (108) und einer zweiten gemeinsamen Steuerleitung (109) verbunden sind, und wobei die Steuerlogiken (112) dazu ausgebildet sind, in Abhängigkeit von Steuersignalen an der ersten Steuerleitung (108) und der zweiten Steuerleitung (109) entweder den jeweiligen ersten Schalter (110) oder den jeweiligen zweiten Schalter (111) in Abhängigkeit von dem Zustand des jeweiligen Registerausgangs (116) zu betätigen oder sämtliche ersten Schalter (110) oder sämtliche zweiten Schalter (111) unabhängig von dem Zustand des jeweiligen Registerausgangs (116) zu betätigen.

8. Bildsensor nach einem der Ansprüche 3 bis 7,
**dadurch gekennzeichnet,**
**dass** die Schalter (110, 111) in dem Bildsensor integriert sind.

9. Bildsensor nach einem der Ansprüche 3 bis 8,
**dadurch gekennzeichnet,**
**dass** die erste Spannungsquelle mit der ersten Testsignalleitung (106) und die zweite Spannungsquelle mit der zweiten Testsignalleitung (107) verbunden oder verbindbar sind.

10. Bildsensor nach einem der vorhergehenden Ansprüche,
**dadurch gekennzeichnet,**
**dass** die Spaltenleitungen (103) mit verschiedenen Testsignalleitungen (106, 107) verbindbar sind,
und/oder
**dass** die Spaltenleitungen (103) zeilenweise mit verschiedenen Testeingangssignalen beaufschlagbar sind.

11. Bildsensor nach einem der vorhergehenden Ansprüche,
**dadurch gekennzeichnet,**
**dass** die Signalvorverarbeitungseinrichtungen (105) dazu ausgebildet sind, auch die auf die Spaltenleitungen (103) geschalteten Testeingangssignale zu verarbeiten,
und/oder
**dass** die jeweilige Signalvorverarbeitungseinrichtung (105) zumindest einen Spaltenverstärker und/oder ein Abtast-Halte-Glied umfasst,
und/oder
**dass** der Bildsensor (103) wenigstens eine Auswerteeinrichtung (120) aufweist, die mit einem Ausgang der Signalvorverarbeitungseinrichtungen (105) verbunden ist, wobei die Auswerteeinrichtung (120) dazu ausgebildet ist, die Testeingangssignale nach deren Verarbeitung in den Signalvorverarbeitungseinrichtungen (105) auszuwerten.

12. Bildsensoreinheit für elektronische Kameras, mit einem Bildsensor, der eine Vielzahl von in Zeilen und Spalten angeordneten lichtempfindlichen Pixeln (101) aufweist, wobei alle oder zumindest ein Teil der Pixel (101) einer Spalte mit einer jeweiligen gemeinsamen Spaltenleitung (103) verbunden sind, wobei der Bildsensor für eine oder mehrere der Spaltenleitungen (103) eine jeweilige Signalvorverarbeitungseinrichtung (105) aufweist, um von den Pixeln erzeugte und auf die jeweilige Spaltenleitung (103) schaltbare Nutzsignale zu verarbeiten, und wobei der Bildsensor dazu ausgebildet ist, wahlweise eines von zumindest zwei Testeingangssignalen auf die Spaltenleitungen (103) aufzuschalten,
**dadurch gekennzeichnet,**
**dass** die Bildsensoreinheit ferner zumindest eine erste Spannungsquelle und eine zweite Spannungsquelle zur Erzeugung der genannten Testeingangssignale aufweist, wobei die Spannungsquellen mit zugeordneten Anschlüssen des Bildsensors verbunden sind, und wobei die jeweilige Spannungsquelle eine unabhängig von der Versorgungsspannung des Bildsensors geregelte Spannungsquelle ist.

13. Bildsensoreinheit nach Anspruch 12,
**dadurch gekennzeichnet,**
**dass** jede Spaltenleitung (103) des Bildsensors derart mit zumindest einem jeweiligen ersten Schalter (110) und einem jeweiligen zweiten Schalter (111) verbunden ist, dass die jeweilige Spaltenleitung (103) über den ersten Schalter (110) und den zweiten Schalter (111) wahlweise mit zumindest einer ersten Testsignalleitung (106) oder einer zweiten Testsignalleitung (107) verbunden werden kann, und dass die erste Spannungsquelle mit der ersten Testsignalleitung (106) und die zweite Spannungsquelle mit der zweiten Testsignalleitung (107) verbunden oder verbindbar sind.

## Claims

1. An image sensor, in particular a CMOS image sensor, for electronic cameras, having a plurality of light-sensitive pixels (101) arranged in rows and columns, wherein all or at least some of the pixels (101) of a column are connected to a respective common column line (103), wherein the image sensor has a respective signal preprocessing device (105) for one or more of the column lines (103) to process wanted signals which are generated by the pixels and which can be switched to the respective column line (103), wherein the image sensor is designed selectively to switch one of at least two test input signals to the column line (103), and wherein the image sensor has at least one first voltage source and one second voltage source for generating the test input signals,
**characterised in that**
the respective voltage source is a voltage source regulated independently of the supply voltage of the image sensor.

2. An image sensor in accordance with claim 1,
**characterised in that**
the image sensor is designed to switch the test input signals onto the column lines (103) without any voltage drop.

3. An image sensor in accordance with claim 1 or claim 2,
**characterised in that**
each column line (103) is connected to at least one respective first switch (110) and to one respective second switch (111) such that the respective column line (103) can be connected via the first switch (110) and the second switch (111) selectively to at least one first test signal line (106) or one second test signal line (107).

4. An image sensor in accordance with claim 3,
**characterised in that**
the first switches (110) are provided between the first test signal line (106) and the respective column line (103); and
**in that** the second switches (111) are provided between the second test signal line (107) the respective column line (103).

5. An image sensor in accordance with claim 3 or claim 4,
**characterised in that**
the first switches (110) are connected to a first control line (108) for the common control of the first switches (110); and
**in that** the second switches (111) are connected to a second control line (109) for the common control of the second switches (111).

6. An image sensor in accordance with claim 3 or claim 4,
**characterised in that**
a register (115) is provided which is made to control the first and second switches (110, 111) for each column line (103) separately so that the respective column line (103) is selectively connected to the first test signal line (106), to the second test signal line (107) or to neither test signal line.

7. An image sensor in accordance with claim 6,
**characterised in that**
a respective control logic (112) is provided between the register (115) and the first and second switches (110, 111) of each column line (103); wherein the control logic (112) at the input side is connected to a respective register output (116) and to a common control line (117); and wherein the control logics (112) are made to actuate in dependence on a control signal at the common control line (117) either the respective first switch (110) or the respective second switch (111) in dependence on the condition of the respective register output (116);
or
**in that** a respective control logic (112) is provided between the register (115) and the first and second switches (110, 111) of each column line (103); wherein the control logics (112) at the input side are connected to a respective register output (116) and to a first common control line (108) and to a second common control line (109); and wherein the control logics (112) are made to actuate in dependence on control signals at the first control line (108) and at the second control line (109) either the respective first switch (110) or the respective second switch (111) in dependence on the condition of the respective register output (116) or to actuate all first switches (110) or all second switches (111) independently of the condition of the respective register output (116).

8. An image sensor in accordance with any one of the claims 3 to 7,
**characterised in that**
the switches (110, 111) are integrated in the image sensor.

9. An image sensor in accordance with any one of the claims 3 to 8,
**characterised in that**
the first voltage source is connected or connectable to the first test signal line (106) and the second voltage source is connected or connectable to the second test signal line (107).

10. An image sensor in accordance with any one of the preceding claims,
**characterised in that**
the column lines (103) are connectable to different test signal lines (106, 107);
and/or
**in that** the column lines (103) can be acted on row-wise by different test input signals.

11. An image sensor in accordance with any one of the preceding claims,
**characterised in that**
the signal preprocessing devices (105) are designed also to process the test input signals switched onto the column lines (103);
and/or
**in that** the respective signal preprocessing device (105) includes at least one column amplifier and/or one sample and hold member; and/or
**in that** the image sensor (103) has at least one evaluation device (120) which is connected to an output of the signal preprocessing device (105), wherein the evaluation device (120) is made to evaluate the test input signals after their processing in the signal preprocessing devices (105).

12. An image sensor unit for electronic cameras, having an image sensor which has a plurality of pixels (101) arranged in rows and columns, wherein all or at least some of the pixels (101) of a column are connected to a respective column line (103); and wherein the image sensor has a respective signal preprocessing device (105) for one or more of the column lines (103) to process wanted signals which are generated by the pixels and which can be switched to the respective column line (103); and wherein the image sensor is made selectively to switch one of at least two test input signals to the column lines (103),
**characterised in that**
the image sensor unit furthermore has at least one first voltage source and one second voltage source for generating the named test input signals, with the voltage sources being connected to associated connectors of the image sensor, and with the respective voltage source being a voltage source regulated independently of the supply voltage of the image sensor.

13. An image sensor unit in accordance with claim 12,
**characterised in that**
each column line (103) of the image sensor is connected to at least one respective first switch (110) and to one respective second switch (111) such that the respective column line (103) can be connected via the first switch (110) and the second switch (111) selectively to at least one first test signal line (106) or one second test signal line (107); and
**in that** the first voltage source is connected or connectable to the first test signal line (106) and the second voltage source is connected or connectable to the second test signal line (107).

## Revendications

1. Capteur d'image, en particulier capteur d'image CMOS, pour caméras électroniques, comprenant une pluralité de pixels photosensibles (101) agencés en rangées et en colonnes, dans lequel tous les pixels ou au moins une partie des pixels (101) d'une colonne sont reliés à une ligne de colonne commune respective (103), le capteur d'image comprenant, pour une ou pour plusieurs des lignes de colonnes (103), un système de prétraitement de signal (100) respectif afin de traiter les signaux utiles engendrés par les pixels et injectés sur la ligne de colonne respective (103), ledit capteur d'image étant réalisé pour injecter sur les lignes de colonnes (103) au choix un parmi au moins deux signaux d'entrée de test, et le capteur d'image comprenant au moins une première et une seconde source de tension pour générer les signaux d'entrée de test,
**caractérisé en ce que**
la source de tension respective est une source de tension régulée indépendamment de la tension d'alimentation du capteur d'image.

2. Capteur d'image selon la revendication 1,
**caractérisé en ce que** le capteur d'image est réalisé pour injecter les signaux d'entrée de test sans chute de tension sur les lignes de colonnes (103).

3. Capteur d'image selon la revendication 1 ou 2,
**caractérisé en ce que** chaque ligne de colonne (103) est reliée à au moins un premier commutateur respectif (110) et à un second commutateur respectif (111) de telle façon que la ligne de colonne respective (103) peut être reliée, via le premier commutateur (110) et le second commutateur (111), au choix avec une première ligne de signal de test (106) ou une seconde ligne de signal de test (107).

4. Capteur d'image selon la revendication 3,
**caractérisé en ce que** les premiers commutateurs (110) sont prévus entre la première ligne de signal de test (106) et la ligne de colonne respective (103), et **en ce que** les seconds commutateurs (111) sont prévus entre la seconde ligne de signal de test (107) et la ligne de colonne respective (103).

5. Capteur d'image selon la revendication 3 ou 4,
**caractérisé en ce que** les premiers commutateurs (110) sont reliés à une première ligne de commande (108) pour le pilotage commun des premiers commutateurs (110), et
**en ce que** les seconds commutateurs (111) sont reliés à une seconde ligne de commande (109) pour le pilotage commun des seconds commutateurs (111).

6. Capteur d'image selon la revendication 3 ou 4,
**caractérisé en ce qu'**il est prévu un registre (115) qui est réalisé pour piloter séparément les premiers et les seconds commutateurs (110, 111) pour chaque ligne de colonne (103), de sorte que la ligne de colonne respective (103) est reliée au choix avec la première ligne de signal de test (106), avec la seconde ligne de signal de test (107) ou avec aucune ligne de signal de test.

7. Capteur d'image selon la revendication 6,
**caractérisé en ce qu'**il est prévu une logique de commande respective (112) entre le registre (115) et le premier et le second commutateur (110, 111), les logiques de commande (112) étant reliées du côté entrée avec une sortie de registre respective (116) et avec une ligne de commande commune (117), et dans lequel les logiques de commande (112) sont réalisées pour actionner, en fonction d'un signal de commande sur la ligne de commande commune (117) soit le premier commutateur respectif (110) soit le second commutateur respectif (111) en fonction de la situation de la sortie de registre respective (116),
ou bien **en ce qu'**il est prévu une logique de commande respective (112) entre le registre (115) et le premier et le second commutateur (110, 111) de chaque ligne de colonne (103), les logiques de commande (112) étant reliées du côté entrée avec une sortie de registre respective (116) et avec une première ligne de commande commune (108) et avec une seconde ligne de commande commune (109), et dans lequel les logiques de commande (112) sont réalisées pour actionner, en fonction des signaux de commande sur la première ligne de commande (108) et sur la seconde ligne de commande (109) soit le premier commutateur respectif (110) soit le second commutateur respectif (111) en fonction de la situation de la sortie de registre respective (116) ou pour actionner la totalité des premiers commutateurs (110) ou la totalité des seconds commutateurs (111) indépendamment de la situation de la sortie de registre respective (116).

8. Capteur d'image selon l'une des revendications 3 à 7,
**caractérisé en ce que** les commutateurs (110, 111) sont intégrés dans le capteur d'image.

9. Capteur d'image selon l'une des revendications 3 à 8,
**caractérisé en ce que** la première source de tension est reliée ou susceptible d'être reliée à la première ligne de signal de test (106) et la seconde source de tension est reliée ou susceptible d'être reliée à la seconde ligne de signal de test (107).

10. Capteur d'image selon l'une des revendications précédentes,
**caractérisé en ce que** les lignes de colonne (103) sont susceptibles d'être reliées à différentes lignes de signal de test (106, 107),
et/ou **en ce que** les lignes de colonne (103) peuvent être alimentées par rangées avec différents signaux d'entrée de test.

11. Capteur d'image selon l'une des revendications précédentes,
**caractérisé en ce que** les systèmes de prétraitement de signaux (105) sont réalisés pour traiter également les signaux d'entrée de test appliqués aux lignes de colonne (103),
et/ou **en ce que** le système de prétraitement de signal respectif (105) comprend au moins un amplificateur de colonne et/ou un circuit d'échantillonnage-maintien,
et/ou **en ce que** le capteur d'image (103) comprend au moins un système d'évaluation (120) qui est relié à une sortie des systèmes de prétraitement de signaux (105), le système d'évaluation (120) étant réalisé pour évaluer les signaux d'entrée de test après leur traitement dans les systèmes de prétraitement de signaux (105).

12. Unité formant capteur d'image pour caméras électroniques, comprenant un capteur d'image qui comprend une pluralité de pixels photosensibles (101) agencés en rangées et en colonnes, dans laquelle tous les pixels ou au moins une partie des pixels (101) d'une colonne sont reliés à une ligne de colonne commune respective (103), le capteur d'image comprenant un système de prétraitement de signal (105) respectif pour une ou plusieurs des lignes de colonne (103), afin de traiter les signaux utiles engendrés par les pixels et injectés sur la ligne de colonne respective (103), et dans laquelle le capteur d'image est réalisé pour commuter au choix un parmi au moins deux signaux d'entrée de test sur les lignes de colonne (103),
**caractérisée en ce que**
l'unité formant capteur d'image comprend en outre au moins une première source de tension et une seconde source de tension pour engendrer les signaux d'entrée de test précités, lesdites sources de tension étant reliées à des bornes associées du capteur d'images, et dans laquelle la source de tension respective est une source de tension régulée indépendamment de la tension d'alimentation du capteur d'image.

13. Unité formant capteur d'image selon la revendication 12,
**caractérisée en ce que** chaque ligne de colonne (103) du capteur d'image est reliée à au moins un premier commutateur respectif (110) et à au moins un second commutateur respectif (111) de telle façon que la ligne de colonne respective (103) peut être reliée via le premier commutateur (110) et le second commutateur (111) au choix avec au moins une première ligne de signal de test (106) ou une seconde ligne de signal de test (107), et **en ce que** la première source de tension est reliée ou susceptible d'être reliée à la première ligne de signal de test (106) et la seconde source de tension est reliée ou susceptible d'être reliée à la seconde ligne de signal de test (107).
